# EUROPEAN PATENT SPECIFICATION

(11) **EP 0 771 616 B1**
(45) Date of publication and mention of the grant of the patent: **27.03.2002**
(21) Application number: 96307950.4
(22) Date of filing: 01.11.1996
(51) Int. Cl.: B25B 27/30

(54) **Heavy duty coil spring compressor**
Hochbelastbarer Spiralfederkompressor
Compresseur de ressorts hélicoidaux de grand puissance

(30) Priority: 03.11.1995 GB 9522557
(43) Date of publication of application: 07.05.1997
(73) Proprietor: Facom UK Limited, Cannock, Staffordshire WS11 3JR (GB)
(72) Inventor: Cross, John, Preston PR3 2JX, Lancashire (GB)
(74) Representative: Attfield, Donald James

(56) References cited:
- EP-A- 0 250 638
- EP-A- 0 424 247
- EP-A- 0 629 474
- GB-A- 2 017 561
- GB-A- 2 261 185

## Description

The present invention relates to a coil spring compressor according to the preamble of claim 1 (see for example GB-A-2 017 561) for use with helical compression springs such as those used in suspensions for motor cars and commercial vehicles.

Spring compressors used in dismantling coil springs in motor cars are well known. Generally such compressors comprise upper and lower semicircular U-shaped shoes which define grooves to receive the coils of a spring to be compressed. The U-shaped shoes are generally mounted on carriages carried on a longitudinally extending body, one of the carriages being linearly adjustable, for example by engagement with a threaded spindle rotation of which moves one shoe towards or away from the other.

Examples of such coil spring compressors are illustrated in GB-A-2017561 and GB-A-2261185.

A disadvantage of current compressors is that they generally do not have sufficient load capacity to compress high rated coil springs such as those used on commercial motor vehicles and there is a tendency for components to distort under pressure thereby resulting in a safety hazard.

European Patent Publication No. 0 629 474, which is considered to represent the closest prior art, discloses a coil spring compressor having two guide rods on which a spring holder is slidably mounted. The spring holder is moved up and down the guide rods by the use of screw-threaded shaft which passes through the movable spring holder. A second immovable spring holder is also provided so that the coil can be compressed by the movable spring holder against the stationary spring holder. In use the coil spring compressor is mounted on a support device.

We have now developed a coil spring compressor that is robust, which is relatively cheap to manufacture and has improved safety characteristics.

Accordingly we now provide a coil spring compressor according to claim 1 wherein the body comprises an elongate hollow frame comprising two parallel side plates providing slide surfaces along the longitudinal edges thereof, the fixed carriage being secured between the side plates at one end of the body and the said locating member being secured between the side plates at the other end of the body, shoulder portions of said movable carriage extending from the carriage body element to slidably engage the slide surfaces of the side plates.

The construction of the compressor of the present invention enables the side plates to the formed of heavy-duty steel thereby providing an extremely rigid structure.

Preferably the body element of the movable carriage slidingly engages the inner walls of the said side plates to provide improved resistance to rotation about an axis normal to the threaded shaft.

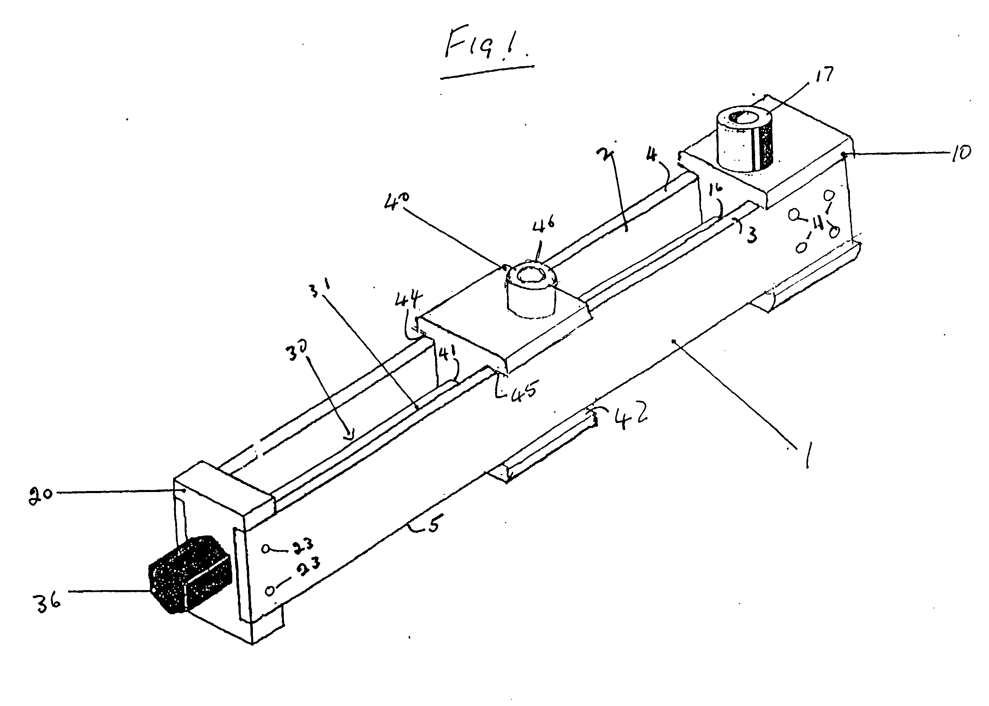

One embodiment of the present invention will now be described by reference to the accompanying drawings in which: -
**Figure 1** is a diagrammatic illustration of one embodiment of the present invention, and

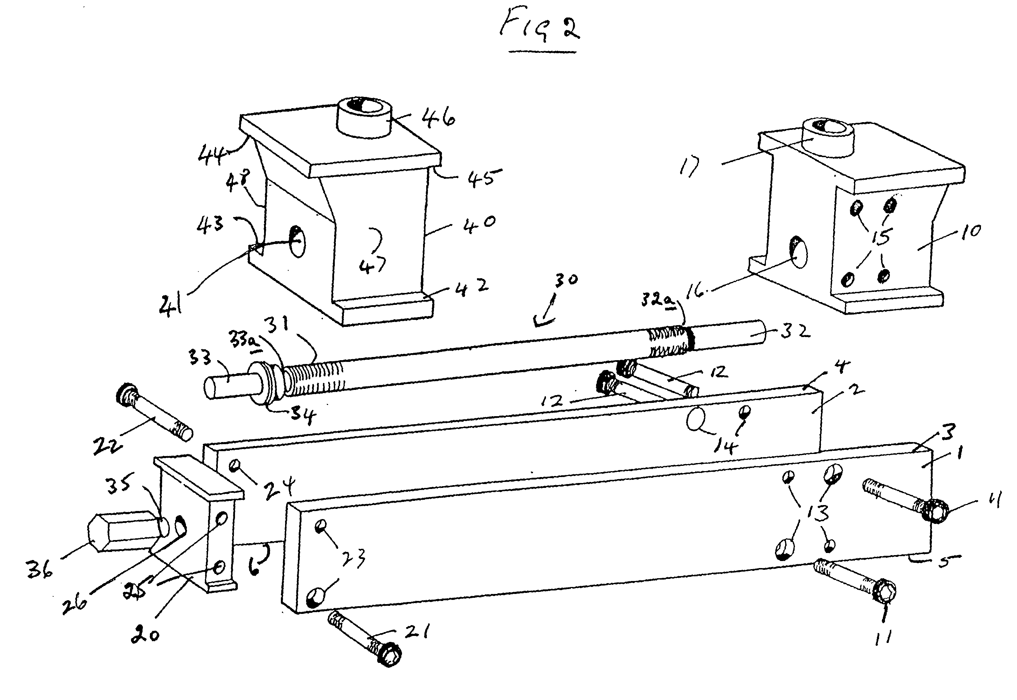

**Figure 2** is an exploded view of the Figure 1 embodiment.

Referring to the drawings a coil spring compressor shown, for clarity, without the U-shaped shoe members, consists of two steel side plates 1 and 2, providing slide surfaces 3,4,5 and 6 extending along the upper and lower edge portions thereof. A fixed carriage 10 is secured between side plates 1 and 2 at one end thereof by the use of threaded bolts 11 and 12 passing through holes 13 and 14 in the side plates and engaging in threaded passageways 15 formed in fixed carriage 10. For reasons of clarity two bolts only are shown at each side. At the other end of the body a locator 20 is secured between side plates 1 and 2 by threaded bolts 21 and 22 passing through holes 23 and 24 in side plates 1 and 2 respectively and engaging in threaded passageways 25 formed in locator 20, again only two such bolts are illustrated.

Fixed carriage 10 and end locator 20 contain bearing passageways 16 and 26 respectively.

A shaft member, generally indicated at 30, comprises a threaded portion 31 extending between end portions 32 and 33 that are machined down to provide shoulders 32a and 33a, portions 32 and 33 being received in bearing passageways 16 and 26 of carriage 10 and end locator 20 respectively to rotatably locate the shaft within the body. A thrust bearing 34 is provided between shoulder 33a and the inner face of end locator 20; a similar bearing may be positioned between shoulder 32a and the face 18 of carriage 10.

End 33 projects through bearing 26 of end locator 20 and is provided with a sheer pin 35 and a hexagon shaped head 36.

A movable carriage 40 contains a screw-threaded passageway 41 through which threaded portion 31 of shaft 30 passes, rotation of the shaft by turning the hexagon head 36 causing carriage 40 to move along shaft 30. Carriage 40 is provided with shoulders 42,43,44 and 45 extending outwardiy thereof and being in sliding engagement with slide surfaces 3,4,5 and 6 of side plates 1 and 2 respectively, sides 47 and 48 of carriage 40 slidably engaging the inner faces of side plates 1 and 2. Fixed carriage 10 and moving carriage 40 include spigots 17 and 46 respectively extending outwardly thereof to be received in complementary recesses of the upper and lower shoe members.

The presence of the sheer pin 35 between the hexagon headed portion 36 and portion 33 of shaft 30 avoids unintentional overloading of the tool during compression of coil springs.

Suitable shoes for use with the present invention are those described in GB-A-2261185, these shoes being rotatably secured to spigots 17 and 46 in the manner described therein, carriages 10 and 46 including the stops with which a portion of the shoes engage to prevent over-rotation as described in the aforementioned specification but not illustrated in the present drawings for reasons of clarity. It is to be understood, however, that shoes of other constructions, which can be adapted to be received on spigots 17 and 46 or other securing means may also be employed with the compressor of the present invention.

The coil spring compressor of the present invention is sufficiently robust for it to be used on a bench, in a vice or as a wall-mounted device.

## Claims

1. A coil spring compressor comprising a longitudinally extending body, a locating member (20) positioned at one end of the body, a fixed carriage (10) positioned at the other end of the body, a movable carriage (40) contained within the body and upper and lower shoe members adapted to engage the coils of a spring to be compressed, one shoe member being carried on the fixed carriage (10) and the other shoe member being carried on the moveable carriage (40) the fixed and movable carriages (10,40) being provided with means to receive and support the said upper and lower shoe members, the movable carriage (40) having a body element containing a screw-threaded passageway (41) to receive a rotatable threaded shaft (30), said shaft (30) having one end (32) received in a bearing (16) formed in the fixed carriage (10) and another end (33) projecting through a bearing (26) formed through the said locating member (20) at the other end of the body, whereby rotation of the shaft (30) causes the carriage (40) to move therealong, **characterised in that** said body comprises an elongate hollow frame comprising two parallel side plates (1,2) providing slide surfaces (3,4,5,6) along the longitudinal edges thereof, the fixed carriage (10) being secured between the side plates (1,2) at one end of the body and the said locating member (20) being secured between the side plates (1,2) at the other end of the body, shoulder portions (42,43,44,45) of said movable carriage (40) extending from the carriage body element to slidably engage the slide surfaces (3,4,5,6) of the side plates (1,2).

2. A coil spring compressor according to claim 1 wherein the movable carriage (40) slidingly engages the inner walls of the said side plates (1,2).

3. A coil spring compressor of claims 1 or 2 wherein fixed carriage (10) and moving carriage (40) include spigots (17,46) extending outwardly to be received in complementary recesses of the upper and lower shoe members.

4. A coil spring compressor according to claims 1, 2 or 3 wherein the shoe members are U-shaped.

5. A coil spring compressor of any preceding claim wherein the end portions (32,33) of the shaft (30) are machined down to give shoulders (32a,33a).

6. A coil spring compressor according to claim 5 wherein one end portion (33) of the shaft (30) projects through the bearing (26) of the locator (20) and is provided with a sheer pin (35) and a hexagon shaped head (36) for rotation of the shaft (30).

7. A coil spring compressor according to any preceding claims wherein the side plates (1,2) are formed of heavy duty steel.

## Patentansprüche

1. Schraubenfeder-Kompressor, welcher einen sich in Längsrichtung erstreckenden Körper, ein Zentrierelement (20), welches an einem Ende des körpers angeordnet ist, einen festen Schlitten (10), welcher an dem anderen Ende des Körpers angeordnet ist, einen beweglichen Schlitten (40), welcher innerhalb des Körpers angeordnet ist, und obere und untere Schuhelemente bzw. Gleitkörper aufweist, welche dafür vorgesehen sind, mit den Schrauben einer zu komprimierenden Feder in Eingriff zu gehen, wobei ein Schuhelement auf dem festen Schlitten (10) und das andere Schuhelement auf dem beweglichen Schlitten (40) getragen ist, wobei der feste und der bewegliche Schlitten (10,40) mit einer Einrichtung versehen sind, um die oberen und unteren Schuhelemente zu tragen, wobei der bewegliche Schlitten (40) ein Gehäuseelement aufweist, welches eine mit einem Gewinde versehene Durchgangsbohrung (41) aufweist, um eine drehbare, mit einem Gewinde versehene Welle (30) aufzunehmen, wobei ein Ende (32) der Welle (30) in einem Lager (16) aufgenommen ist, welches sich in dem festen Schlitten (10) befindet, und ein weiteres Ende (33) sich durch ein Lagerelement (26) erstreckt, welches durch das Zentrierelement an dem anderen Ende des Körpers gebildet ist, wobei eine Rotation der Welle (30) die Bewegung des Schlittens (40) entlang desselben bewirkt,
**dadurch gekennzeichnet, daß**
der Körper einen länglichen, hohlen Rahmen mit zwei parallelen Seitenplatten (1,2) aufweist, welche Gleitflächen (3,4,5,6) entlang der Längsränder desselben aufweist, wobei der feste Schlitten (10) zwischen den Seitenplatten (1,2) an einem Ende des Körpers befestigt ist, und wobei das Zentrierelement (20) zwischen den Seitenplatten (1,2) an dem anderen Ende des Körpers befestigt ist, wobei Schulterabschnitte (42,43,44,45) des beweglichen Schlittens (40) sich von dem Schlitten-Körperelement erstreckt, um mit den Gleitflächen (3,4,5,6) der Seitenplatten (1,2) in Eingriff zu gehen.

2. Schraubenfeder-Kompressor nach Anspruch 1,
**dadurch gekennzeichnet, daß**
der bewegliche Schlitten (40) gleitend mit den inneren Wänden der Seitenplatten (1,2) in Eingriff steht.

3. Schraubenfeder-Kompressor nach den Ansprüchen 1 oder 2,
**dadurch gekennzeichnet, daß**
der feste Schlitten (10) und der bewegliche Schlitten (40) Zapfen (17,46) aufweisen, welche sich nach außen erstrecken, um in entsprechenden Ausnehmungen der oberen und unteren Schuhelemente aufgenommen zu werden.

4. Schraubenfeder-Kompressor nach den Ansprüchen 1, 2 oder 3,
**dadurch gekennzeichnet, daß**
die Schuhelemente U-förmig ausgebildet sind.

5. Schraubenfeder-Kompressor nach einem der vorhergehenden Ansprüche,
**dadurch gekennzeichnet, daß**
die Endbereiche (32,33) der Welle (30) bearbeitet sind, um Schultern (32a,33a) zu bilden.

6. Schraubenfeder-Kompressor nach Anspruch 5,
**dadurch gekennzeichnet, daß**
ein Endbereich (33) der Welle (30) sich durch das Lagerelement (26) des Zentrierelements (20) erstreckt und mit einem Verbindungsstift (35) und einem sechskantförmigen Kopf (36) zum Rotieren der Welle (36) versehen ist.

7. Schraubenfeder-Kompressor nach einem der vorhergehenden Ansprüche,
**dadurch gekennzeichnet, daß**
die Seitenplatten (1,2) aus Hochleistungsstahl bestehen.

## Revendications

1. Compresseur à ressort à boudin comprenant un corps s'étendant de manière longitudinale, un élément de fixation (20) positionné au niveau d'une extrémité du corps, un chariot fixe (10) positionné au niveau de l'autre extrémité du corps, un chariot mobile (40) renfermé à l'intérieur du corps et des éléments formant coussinets supérieur et inférieur adaptés pour venir en prise avec les boudins d'un ressort à comprimer, un élément formant coussinet étant transporté sur le chariot fixe (10) et l'autre élément formant coussinet étant transporté sur le chariot mobile (40), les chariots fixe et mobile (10, 40) étant dotés de moyens destinés à recevoir et à supporter les éléments formant coussinets supérieur et inférieur, le chariot mobile (40) ayant un élément formant corps contenant un passage à filetage de vis (41) de manière à recevoir un arbre fileté rotatif (30), ledit arbre (30) ayant une extrémité (32) reçue dans un support (16) formé dans le chariot fixe (10) et une autre extrémité (33) se projetant à travers un support (26) formé à travers ledit élément de fixation (20) au niveau de l'autre extrémité du corps, moyennant quoi la rotation de l'arbre (30) entraîne le déplacement du chariot (40) le long de celui-ci, **caractérisé en ce que** ledit corps comprend un châssis creux allongé comprenant deux plaques latérales parallèles (1, 2) fournissant des surfaces coulissantes (3, 4, 5, 6) le long des bords longitudinaux de celles-ci, le chariot fixe (10) étant fixé entre les plaques latérales (1, 2) au niveau d'une extrémité du corps et ledit élément de fixation (20) étant fixé entre les plaques latérales (1, 2) au niveau de l'autre extrémité du corps, des parties formant épaulements (42, 43, 44, 45) dudit chariot mobile (40) s'étendant à partir de l'élément formant corps de chariot afin de venir en prise de manière coulissante avec les surfaces coulissantes (3, 4, 5, 6) des plaques latérales (1, 2).

2. Compresseur à ressort à boudin selon la revendication 1, dans lequel le chariot mobile (40) vient en prise de manière coulissante avec les parois internes desdites plaques latérales (1, 2).

3. Compresseur à ressort à boudin selon la revendication 1 ou 2, dans lequel le chariot fixe (10) et le chariot mobile (40) comprennent des tourillons (17, 46) s'étendant vers l'extérieur de manière à être reçus dans des cavités complémentaires des éléments formant coussinets supérieur et inférieur.

4. Compresseur à ressort à boudin selon la revendication 1, 2 ou 3, dans lequel les éléments formant coussinets sont en forme de U.

5. Compresseur à ressort à boudin selon l'une quelconque des revendications précédentes, dans lequel les parties d'extrémité (32, 33) de l'arbre (30) sont enlevées par usinage de manière à produire des épaulements (32a, 33a).

6. Compresseur à ressort à boudin selon la revendication 5, dans lequel une partie d'extrémité (33) de l'arbre (30) fait saillie à travers le support (26) de l'élément de fixation (20) et est doté d'une broche précise (35) et d'une tête de forme hexagonale (36) pour la rotation de l'arbre (30).

7. Compresseur à ressort à boudin selon l'une quelconque des revendications précédentes, dans lequel les plaques latérales (1, 2) sont formées à partir d'acier haute résistance.
